Europäisches Patentamt

European Patent Office

Office européen des brevets

Veröffentlichungsnummer: **0 262 366**
**A1**

## EUROPÄISCHE PATENTANMELDUNG

Anmeldenummer **87111900.4**

Int Cl⁴ **G01L 9/06**

Anmeldetag **17.08.87**

Priorität **30.09.86 DE 3633184**

Veröffentlichungstag der Anmeldung:
**06.04.88 Patentblatt 88/14**

Benannte Vertragsstaaten·
**DE FR GB IT NL**

Anmelder: **Siemens Aktiengesellschaft Berlin
und München**
**Wittelsbacherplatz 2**
**D-8000 München 2(DE)**

Erfinder: **Hagen, Heinz, Dipl.-Ing.**
**Albrecht-Dürer-Strasse 32**
**D-8014 Neubiberg(DE)**
Erfinder: **Becker, Klaus, Dipl.-Ing.**
**Balanstrasse 69**
**D-8000 München 90(DE)**

**Drucksensorelement.**

Ein Drucksensorelement mit einer Drucksensor-Meßzelle (3) soll geringe Verluste für den Fall ermöglichen, daß unzulässige Abweichungen des Drucksensors vom gewünschten Idealverhalten erst nach Montage des Drucksensor-Chips gemessen werden können. Die Drucksensor-Meßzelle (3) ist elektrisch isoliert auf einem Träger (1, 11, 41, 51) aufgebracht.

## FIG 5

## Drucksensorelement

Die Erfindung betrifft ein Drucksensorelement nach dem Oberbegriff des Anspruchs 1

Das Kernstück eines Drucksensor auf piezo-resistiver Basis ist eine Halbleitermembran in der beispielsweise durch Ionenimplantation Widerstandsbahnen erzeugt sind Wird auf diese Membran ein Druck ausgeübt und biegt sich diese Membran durch, so führt dies zu Widerstandänderungen nach dem piezo-resistiven Effekt

An die Qualität des Drucksensors werden hohe Anforderungen gestellt Beispielsweise sollen eine hohe Empfindlichkeit bei geringer Linearitätsabweichung und vorgegebener Überlastsicherheit realisiert sein. Durch die Technologie des Sensorchips werden die Streuungen der Nullpunktspannung. der Empfindlichkeit und deren Temperaturabhängigkeit sowie die Stabilität des Drucksensors entscheidend bestimmt. Weitere vom gewünschten Idealverhalten abweichende Effekte wie Langzeitdrift. Druck-und Temperaturhysteresen sowie eine gute Dichtigkeit des Drucksensors werden jedoch hauptsächlich durch die Montageart beeinflußt.

Aus der US-Patentschrift 3 817 107 ist ein Drucksensor bekannt, bei dem der Drucksensor-Chip direkt in ein extrem teueres Gehäuse montiert ist. Unzulässige Abweichungen des Drucksensors vom gewünschten Idealverhalten, welche erst durch die Montage entstehen oder welche erst nach der Montage des Drucksensors festgestellt werden können, verursachen beim Stand der Technik wegen der extrem teueren Spezialgehäuse hohe Verluste.

Der vorliegenden Erfindung liegt die Aufgabe zugrunde, ein Drucksensorelement der eingangs genannten Art anzugeben, welches geringere Verluste für den Fall ermöglicht, daß nach Montage des Drucksensor-Chips unzulässige Abweichungen in solchen Größen auftreten, welche erst nach Montage des Drucksensor-Chips gemessen werden können.

Diese Aufgabe wird erfindungsgemäß durch ein Drucksensorelement nach dem Anspruch 1 gelöst.

Ausgestaltungen und Vorteile der Erfindung sind in den Unteransprüchen, der Beschreibung und der Zeichnung dargestellt.

Die Montage und der Aufbau eines Drucksensorelements nach der Erfindung sind derart, daß eine problemlose Weiterverarbeitung des Drucksensorelements möglich ist.

Ein Drucksensorelement nach der Erfindung kann komplett gemessen werden, und kann von jedem Anwender in einfacher Weise weiterverarbeitet werden.

Ein Drucksensorelement nach der Erfindung kann als ein Zwischenglied zwischen dem reinen Sensorchip und einem Sensorgehäuse betrachtet werden

Ein Drucksensorelement nach der Erfindung bietet einen Handhabungsschutz (handling-Schutz) für einen Anwender

Durch die Erfindung kann dem Anwender ein vollständig geprüftes und qualitativ abgesichertes Sensorelement angeboten werden

Ein Drucksensorelement nach der Erfindung kann als ein Sensor-Modul betrachtet werden. Einzelne Sensor-Module können in verschiedene Sensor-Gehäuse eingebaut werden. Ein Sensorelement nach der Erfindung ist daher für eine mannigfaltige Zahl von verschiedenen Gehäusen und somit beinahe universell anwendbar.

Ein Sensorelement nach der Erfindung ist bei Ausgestaltung mit einem Keramikträger wesentlich billiger als ein Sensor nach dem Stand der Technik. bei dem der Sensor-Chip direkt in einem teueren Spezialgehäuse montiert ist. Bei einem Ausfall eines Sensorelements nach der Erfindung ist daher der Verlust deutlich geringer als beim Stand der Technik.

Ein Spezialgehäuse nach dem Stand der Technik ist etwa 100 g schwer und weist eine komplizierte Struktur auf. Demgegenüber ist ein Sensorelement nach der Erfindung leicht, besitzt eine einfache Struktur und ist insgesamt problemlos meßbar.

Die Erfindung ermöglicht eine einfache dynamische Messung des Druckverhaltens und des Temperaturverhaltens einer Sensormeßzelle.

Die Erfindung ermöglicht, daß jeder Anwender ein für seine speziellen Anwendungszwecke speziell angepaßtes Sensor-Gehäuse verwenden kann.

Ein Sensorelement nach der Erfindung ist auch ohne Ölfüllung allgemein anwendbar, solange keine agressiven und solange keine elektrisch leitenden Medien vorhanden sind.

Besonders vorteilhaft kann ein Sensorelement nach der Erfindung mit einer Trennmembran und mit einer Ölfüllung für Medientrennung verwendet werden.

Die Erfindung wird im folgenden an einem Ausführungsbeispiel näher erläutert. Dabei wird die Erfindung speziell anhand von Hochdruck-Sensormeßzellen dargestellt.

FIG 1 und 2 zeigen schematisch Schnitte durch Sensormeßzellen, die auf Trägern angeordnet sind.

FIG 3 und 4 zeigen schematisch Draufsichten auf die Gegenstände der FIG 1 und 2.

FIG 5 und 6 zeigen die Gegenstände der FIG 1 und 2 nach Aufbringen eines Deckels

FIG 7 und 8 zeigen Draufsichten auf die Gegenstände der FIG 5 und 6

FIG 9 und 10 zeigen Einzelheiten der Montage eines Sensorelements in einem Gehäuse

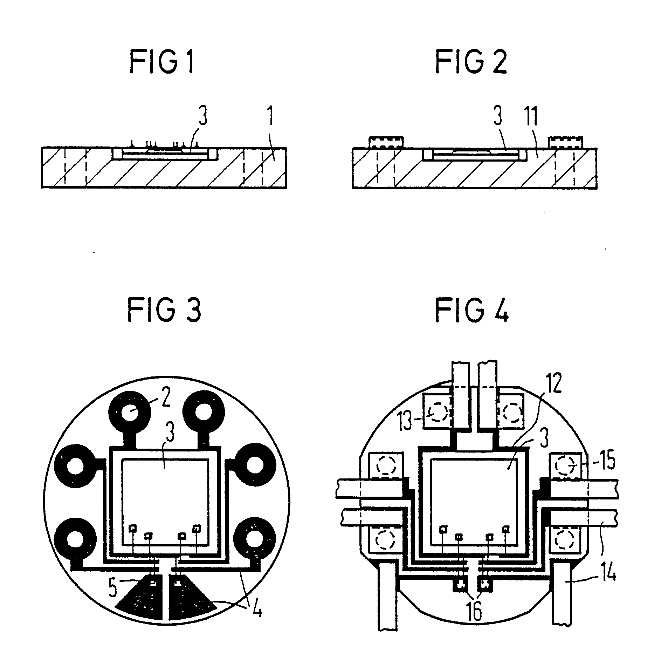

Die FIG 1 3. 5 und 7 charakterisieren eine erste Variante eines Sensorelements Die FIG 2 4 6 und 8 charakterisieren eine zweite Variante eines Sensorelements

Eine in bekannter Technologie hergestellte Sensormeßzelle (Sensor-Chip) 3 ist elektrisch isoliert auf einem thermisch angepaßten Träger 1 11 der vorzugsweise aus Aluminiumnitrid besteht. durch Klebe-oder Löttechnik und durch Ultraschall-oder Thermokompressions-Bondung aufgebracht

Auf einem Trägersubstrat 1. 11 befindet sich die Drucksensormeßzelle 3. Das Trägersubstrat 1. 11 besitzt Aufnahmebohrungen 2. 13 für elektrische Anschlüsse zur Montage des Sensorelements in ein Gehäuse. Die Aufnahmebohrungen 2. 13 sind mit der Drucksensor-Meßzelle 3 und mit Temperatursensoren 5. 16 elektrisch über Anschlußmetallisierungen 4. 12 verbunden.

In FIG 4 sind Anschlußbänder 15 und eine Anschlußspinne 14 dargestellt. Bei Verwendung einer Anschlußspinne 14. die auch bei einem Sensorelement nach FIG 3 möglich ist, kann das Montageverfahren für die Montage des Sensorelements in ein Gehäuse in kostengünstiger Bandmontagetechnik durchgeführt werden.

In den FIG 3 und 4 sind spezielle Leitbahngeometrien zu erkennen. Mit solchen speziellen Leitbahngeometrien können zusätzlich Temperatursensoren 5. 16 zur Kompensation der Sensor-Meßzelle und zur Erfassung der Temperatur des Meßmediums aufgebracht werden. Die Leitbahnen 4. 12 sind zum Rand des Trägers 1. 11 herausgeführt.

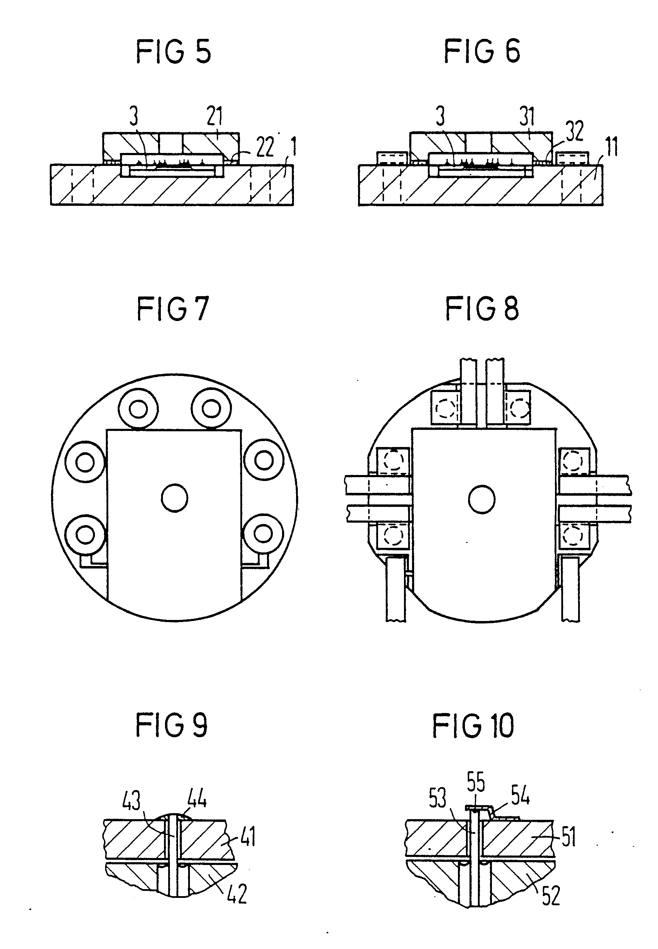

Die FIG 5 bis 8 zeigen einen Deckel 21. 31. der vorzugsweise aus dem gleichen Material wie der Träger 1. 11 besteht. Der Deckel 21. 31 ist beispielsweise mit Epoxyharz 22. 32 auf den zugehörigen Träger 1. 11 aufgeklebt. Der Deckel 21. 31 schützt die Sensor-Meßzelle 3 vor mechanischer Beschädigung. Ein fertiges Sensorelement nach den FIG 5 bis 8 kann komplett nach Datenblatt geprüft und, qualitativ voll abgesichert, an einen Anwender weitergegeben werden.

Die Montage von außerhalb der Datenblattgrenzen liegenden Sensor-Meßzellen, bei denen solche Parameter außerhalb der Datenblattgrenzen liegen, die bei der Messung einer Halbleiterscheibe nicht meßbar sind, in extrem teuere Spezialgehäuse, bei welcher Montage ein hoher Wertschöpfungsgrad stattfindet, kann durch die Erfindung vermieden werden.

Infolge des geringen Volumens des Sensorelements. was anand der FIG 5 und 6 leicht ersichtlich ist. wird das Füllvolumen von mediengetrennten Sensoren auf. einfache Art und Weise stark reduziert Damit wird der Forderung nach einem möglichst kleinen Anteil des Ölfüllvolumens gegenüber dem Gehäuseinnenraum Rechnung getragen Dadurch werden automatisch unerwünschte Temperatureffekte die beim Stand der Technik durch die stark unterschiedliche Ausdehnung von Metallgehäusen und Füllmedien z B Siliconöl. welche sich um einen Faktor 100 unterscheiden können. vermieden Bei Anwendung eines Sensorelements nach der Erfindung für Medientrennung können die dann noch verbleibenden Resteffekte über die Auslegung einer Trennmembran. die im Inneren des Sensorelements in einer dem Fachmann bekannten Weise anzubringen ist. problemlos ausgeglichen werden.

Träger 1. 11 und Deckel 21. 31 bestehen vorzugsweise aus einem Material. dessen thermischer Ausdehnungskoeffizient an den thermischen Ausdehnungskoeffizienten der Sensor-Meßzelle 3 angepaßt ist.

FIG 9 und 10 zeigen Einzelheiten der Montage des Sensorelements in ein Gehäuse. Die zum Rand des Trägers 1. 11 herausgeführten Anschlußmetallisierungen 4. 12 können mittels Löttechnik (FIG 9) oder mittels Schweißtechniken über die Anschlußbänder 54 bzw. Anschlußfahnen (FIG 10) mit dem Gehäuse 42. 52 des Anwenders verbunden werden. FIG 9 zeigt einen Sensorträger 41. das Gehäuse 42. eine elektrische Durchführung 43 und ein Lötauge 44, das bei der Anschlußlötung des Sensorelements im Gehäuse 42 entsteht. FIG 10 zeigt einen Sensorträger 51. ein Gehäuse 52, eine elektrische Durchführung 53, ein Anschlußband 54 und eine Anschlußschweisung 55.

Bezugszeichenliste

1.11 = Thermisch angepaßter Träger
2. 13 = Aufnahmebohrungen
3 = Drucksensor-Meßzelle (Sensor-Typ)
4. 12 = Anschlußmetallisierungen
5. 16 = Temperatursensor
14 = Anschlußspinne
15 = Anschlußbänder
21. 31 = Deckel
22. 32 = Epoxyharz
41. 51 = Sensorträger
42. 52 = Gehäuse eines Anwenders
43. 53 = Elektrische Durchführung
44 = Lötauge
54 = Anschlußband
55 = Anschlußschweisung

## Ansprüche

1. Drucksensorelement mit einer Drucksensor-Meßzelle (3). **dadurch gekennzeichnet. daß** die Drucksensor-Meßzelle (3) elektrisch isoliert auf einem Träger (1. 11. 41. 51) aufgebracht ist

2 Drucksensorelement nach Anspruch 1 ·**dadurch gekennzeichnet. daß** der Träger (1. 11 41 51) aus Keramikmaterial besteht

3 Drucksensorelement nach Anspruch 1 oder 2. **dadurch gekennzeichnet. daß** der thermische Ausdehnungskoeffizient des Trägers (1. 11. 41. 51) an den thermischen Ausdehnungskoeffizienten der DrucksensorMeßzelle (3) angepaßt ist.

4. Drucksensorelement nach einem der Ansprüche 1 bis 3. **dadurch gekennzeichnet. daß** die elektrischen Leitbahnen (4. 12) zum Rand des Trägers (1. 11. 41. 51) herausgeführt sind.

5. Drucksensorelement nach einem der Ansprüche 1 bis 4. **gekennzeichnet** durch einen Deckel (21. 31). der aus dem gleichen Material wie der Träger (1. 11. 41. 51) besteht.

6. Drucksensorelement nach einem der Ansprüche 1 bis 5. **gekennzeichnet** durch eine Anschlußspinne (14) zur kostengünstigen Montage des Drucksensorelements in einem Gehäuse.

7. Verwendung eines Drucksensors nach einem der Ansprüche 1 bis 6 als mediengetrennten Drucksensor.

FIG 1

FIG 2

FIG 3

FIG 4

FIG 5

FIG 6

FIG 7

FIG 8

FIG 9

FIG 10

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X,Y | US-A-4 399 707 (D.B. WAMSTAD) * Zusammenfassung; Spalte 2, Zeilen 5-67; Figur 1 * | 1-7 | G 01 L 9/06 |
| X,Y | DE-A-3 419 710 (K.K. TOYOTA CHUO KENKYUSHO) * Seite 17, Zeilen 9-30; Figur 10 * | 1-7 | |
| Y | INSTRUMENTS & CONTROL SYSTEMS, Jahrgang 52, Band 4, April 1979, Seiten 23-29, Radnor, US; J. HALL: "Monitoring pressure with newer technologies" * Seite 29, Abschnitt 1; Figuren 4a,4b * | 1-7 | |
| Y | US-A-4 322 980 (S. SUZUKI et al.) * Zusammenfassung; Spalte 3, Zeilen 62-68; Spalte 4, Zeilen 1-21,61-64; Spalte 6, Zeilen 28-44; Anspruch 6; Figur 4 * | 1-7 | |
| Y | US-A-4 287 772 (C.A. MOUNTEER et al.) * Spalte 5, Zeilen 18-31; Figur 2 * | 1-7 | **RECHERCHIERTE SACHGEBIETE (Int. Cl.4)** G 01 L 9 |

Der vorliegende Recherchenbericht wurde für alle Patentansprüche erstellt

| Recherchenort | Abschlußdatum der Recherche | Prüfer |
|---|---|---|
| DEN HAAG | 04-01-1988 | VAN ASSCHE P.O. |